# EUROPEAN PATENT SPECIFICATION

(11) **EP 0 423 434 B1**
(45) Date of publication and mention of the grant of the patent: **13.09.1995**
(21) Application number: 90113894.1
(22) Date of filing: 20.07.1990
(51) Int. Cl.: H04Q 3/52

(54) **Multiprocessor computer with optical data switch**
Multiprozessorrechner mit optischer Datenschalter
Ordinateur à multiprocesseur avec un commutateur de données optique

(30) Priority: 18.10.1989 US 424360
(43) Date of publication of application: 24.04.1991
(73) Proprietor: International Business Machines Corporation, Armonk, N.Y. 10504 (US)
(72) Inventor: Smithgall, William Todd, League City, Texas 77573 (US)
(74) Representative: Schäfer, Wolfgang, Dipl.-Ing.

(56) References cited:
- WO-A-80/01028
- US-A- 4 074 142
- US-A- 4 358 858
- OPTICAL ENGINEERING. vol. 28, no. 4, April 1989, BELLINGHAM US pages 315 - 327;A. Hartman et al: "Design sketches for optical crossbar switches intended forlarge-scale parallel processing applications"

## Description

This invention relates to a data switch for sharing data among a plurality of data processing members interconnected with each other by optical data transmission paths which include reflecting means to direct a transmission path from one of said data processing members to another of said data processing members.

A multiprocessor computer is one in which the calculating task is divided up among several, sometimes many similar processor elements. The processors are often logically arranged in a geometric pattern such as, for example, the squares on a checkerboard. The difficulty of making electrical connections among processors, especially when the number of them is large, has forced a compromise which allows a processor to communicate directly with only its geometrically adjacent neighbors.

This approach solves the interconnection problem, but forces some severe constraints on the applications software which is to run in this environment. The software must not only lend itself to being broken up into modules that can execute in parallel, but also these modules must interrelate in such a way that any external data that they require must be available from an adjacent processor. Thus, the geometry of the computer weighs heavily on the final form of the software. If the applications software must deviate from the ideal form dictated by the computer geometry, the advantages of using multiple processors are quickly lost to cumbersome data transfers between non-adjacent processors.

It is well known to use optical switching networks to transmit input signals received on a plurality of input lines to any of a plurality of output lines (US-A-4 074 142 and PCT WO 80/01028). Such networks include arrays of light emitting diodes transforming the electrical input signals into light signals which project through a lens system to photo sensors connected to the output lines. Input and output address decoding and selection circuits are used to selectively enable one of light emitting diode and one photo sensor so that each input line may be electro-optically coupled to a selected output line. Optical switching networks of this type allow high speed data transfer among a large number of input and output lines.

It is also known to provide an optical switching network with a mirror located in the optical transmission paths to make the two-side arrangement as described above to a single-side arrangement (Hartmann/Redfield, Design sketches for optical crossbar switches intended for large-scale parallel processing applications, Optical Engineering, vol. 28 (1989), no. 4, April 1989, pages 315-327 (324, 325, 326). In this way the transmission paths is folded and thus its length is reduced. The mirror has a twisted shape providing different horizontal deflections at each different vertical position on the mirror allowing any target to be reached. The communication is performed between an plurality of processors and a plurality of memories by means of general nodes arranged in front of the mirror. Also in this network switching takes place by selecting the appropriate light emitting elements to become active and by optically deflecting the light beams according to the desired target sensor. Such optical operations require complex control and actuation circuits and limit the transmission speed.

Furthermore, a device is known which also uses the folding concept for an optical coupling of a number of processors by a single beam arrangement (US-A-4 358 858). The processors are disposed on a curved plane in front of a cylindrical mirror. This device exploits the stray angle of the optical radiation to distribute the light signals originated by one of the processors and reflected by the cylindrical mirror to the other processors. The device requires a considerable design expenditure and is for space reasons restricted to a limited number of processors which have to be arranged one beside the other on a curved line. In addition, the single beam transmission limits the operation speed.

The invention provides an improved arrangement for a multiprocessor environment using folded optical transmission paths of high performance.

Therefore, it is an object of this invention as claimed to provide an optical data switch which allows any processor in a multiprocessing environment to simultaneously read data from any other processor.

The measures to achieve this object are characterized in the claim 1. The other claims are directed to preferred embodiments of some of the features of the invention.

According to the invention each processor has associated with it a data projector, such as a laser or array of light emitting diodes (LED's), and a reading device, such as a Charge Coupled Device (CCD) array. An optically reflective screen, or mirror, is arranged so that all processors can project their data on the screen at a specified location. Each processor's reading device has a view of the entire screen, thereby being capable of reading data from any other processor.

For a better understanding of the present invention, together with further objects and advantages, a preferred embodiment of the invention is described in the following with reference to the accompanying drawings, in which:
- Fig. 1: is a side view of the optical data switch showing the reader/projector arrays in relation to the reflective screen;
- Fig. 2: shows a plane view of a 3 x 3 reader/projector array;
- Fig. 3: shows a 12 x 12 CCD array;
- Fig. 4: shows a plane view of a reflective screen for a 3 x 3 projector array.

While the optical data switch to be described is associated with computer processors, the design and function of the processors themselves is beyond the scope of this invention. Therefore, it would be apparent to one skilled in the art that any of the currently available and well-known processor technology can be utilized in connection with the optical data switch herein disclosed. Also, for ease of understanding, the invention is described for use with a 9 processor array, each processor transmitting 16 bits of information at a time. Of course, the actual implementation can be extended to any number of processors transmitting any number of bits of data.

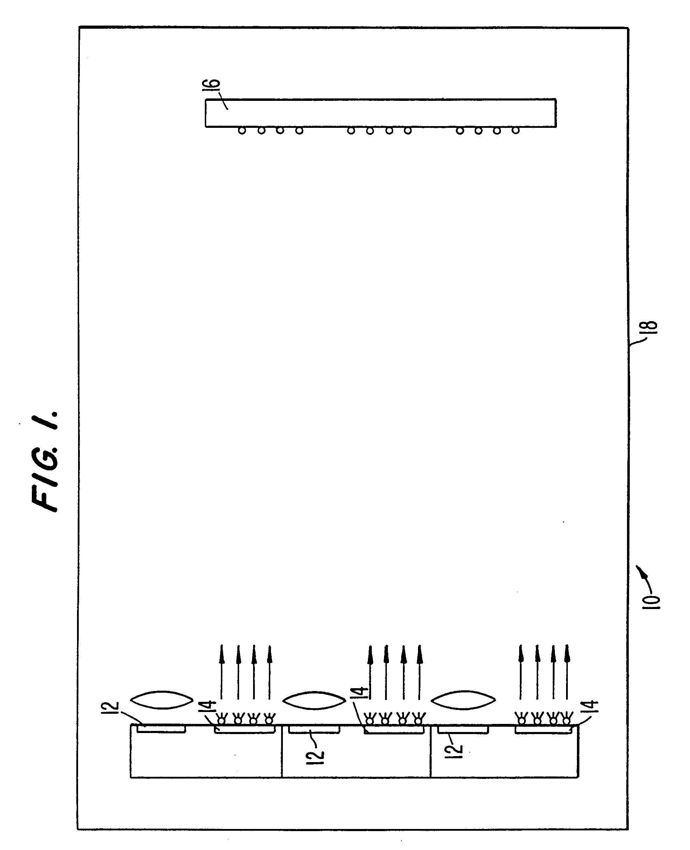

Referring to Fig. 1, the optical data switch 10 consists of three primary components, a data reading device 12 associated with each individual processor, a data projector 14 associated with each individual processor, and an optically reflective screen 16, such as a mirror. All of these components are housed in a light-proof enclosure 18. Each of these components will be described in greater detail.

### Data Projector

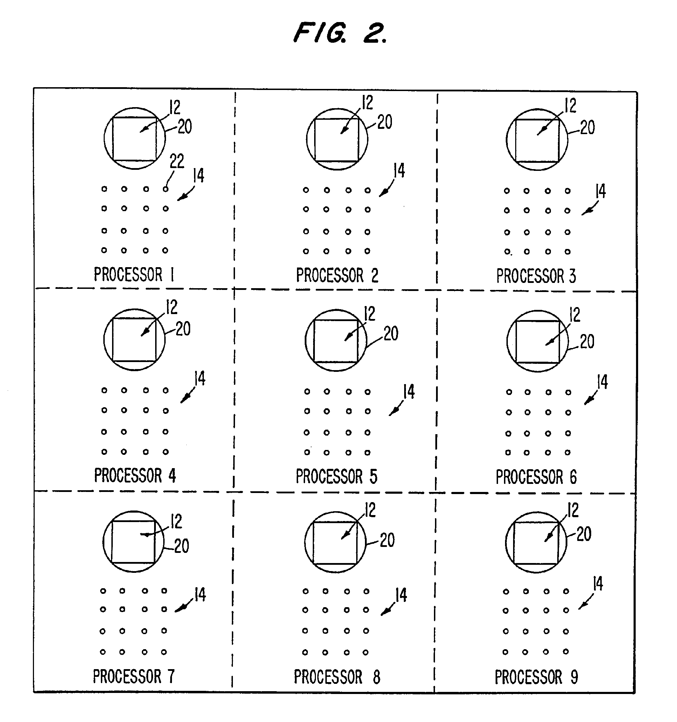

Fig. 2 shows a 3 x 3 array of data reading devices 12 and data projectors 14 for a 9 processor computer system. Each processor has associated with it a data reading device 12, with focusing lens 20 and a data projecting device 14. Data projecting device 14 is illustrated for a 4 x 4 or 16 bit arrangement, but it would be evident to one skilled in the art that projecting device 14 can include any number of optically active devices for any number of desired bits.

Each projector 14 consists of optically active devices, devices that emit visible radiation and whose light output can be focused into a tight beam for projection against a reflective screen. The aiming and focusing of the light beams are critical, since a processor's data must be at the correct place on the screen so that the other processors can find it when needed. In the preferred embodiment, the projecting elements 22 are very small LED's. Their primary requirement is that they be bright enough and have a wide enough angle of dispersion that their images in the reflecting screen are visible and resolvable from the vantage point of all other processors in the system. Alternatively, solid-state lasers could be used. Each processor has it own array of projecting elements 22.

### Data Reading Device

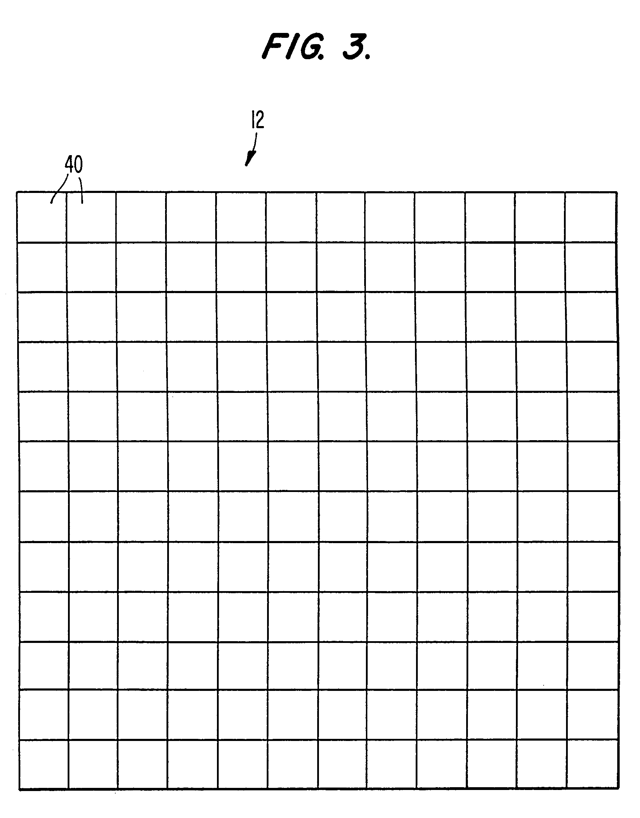

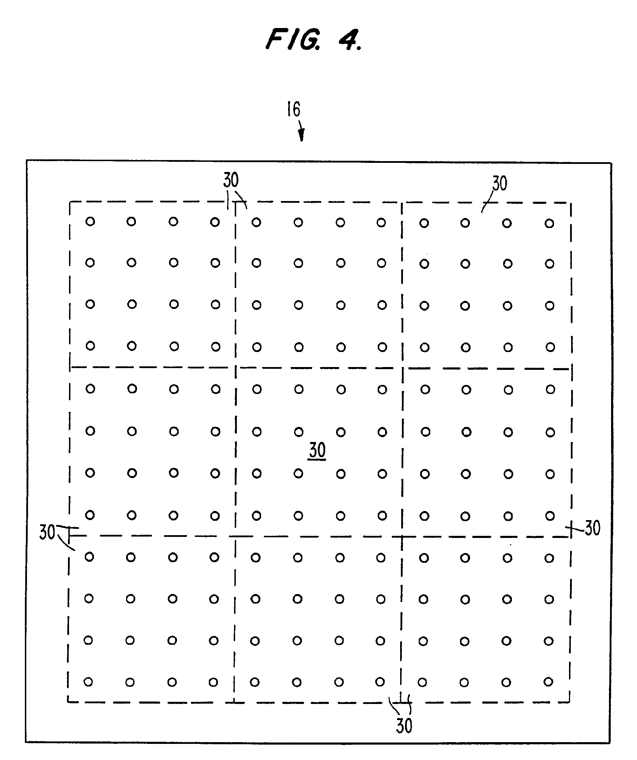

Each processor also has a data reading device 12 associated with it that is capable of viewing the reflective screen 16 (Fig. 2) and all the data projected therein. The data reading device 12 must be capable of converting light into an electrical signal and it must have sufficient resolution to discriminate between different regions 30 of the reflective screen and different dot patterns within a region 30 (Fig. 4) Referring to Fig. 3, one data reading device 12 is shown. For this example, the data reading device 12 is a Charge-Couple Device (CCD) having 144 elements 40 in a 12 x 12 array. There is a 1 to 1 correspondence of elements 40 to data projecting elements 22 (Fig. 2). The CCD 12 is an array of optically sensitive cells 40 which convert light to electrical signals. It is designed to resolve between many different light levels, but the application only requires the ability to distinguish between "on" and "off". Referring back to Fig. 2, each data reading device 12 sits behind a lens 20 which focuses the reflected light from the screen onto the device 12.

### Reflective Screen

The reflective screen 16 is shown on Fig. 4. Its requirements are that it be flat, rigid enough to resist distortion due to vibration and temperature changes, and optically uniform. Many suitable materials are currently available: glass, ceramic or metal with a proper surface preparation or coating. In the preferred embodiment, the reflective screen 16 is a mirror.

Reflective screen 16 is divided up into 9 regions 30, each associated with a processor. Within each region 30, data from that processor is projected and reflected to all the data reading devices. In this manor, each processor is capable of reading data from all other processors.

### Light-Proof Enclosure

To eliminate any undesired light from interfering with the transmission of data, a light-proof enclosure 18 is required, as shown in Fig. 1. Another requirement is that the reading devices, the data projectors, the screen, any associated optical devices must be held in rigid physical relationship to each other. A single enclosure could perform all of these tasks.

With the invention described herein, the concept of parallel computing has even greater potential. Since data transfer has been improved significantly, each processor has a much simpler task to perform and can therefore be a much simpler device. Future application can be extended to other information handling fields such as data switches for telephone systems, switches for electronic networks, etc.

## Claims

1. A data switch for sharing data among a plurality of data processing members interconnected with each other by optical data transmission paths which include reflecting means to direct a transmission path from one of said data processing members to another of said data processing members,
characterized by the combination of following features:
an array of data processors (1 to 9),
projecting means (14) connected to each of said data processors (1 to 9) for optically projecting at a time multiple bit data generated by said data processors,
reading means (12) connected to each of said data processors (1 to 9) for reading at a time multiple bit data projected by said projecting means (14) of one or more of said data processors,
reflecting means (16) for reflecting at a time multiple bit data sets projected by said projecting means (14) of one or more of said data processors (1 to 9) to said reading means (12) of one or more of said data processors,
optically aligning said projecting means (14) of all of said data processors (1 to 9), said reflecting means (16) and said reading means (12) of all of said data processors (1 to 9) with respect to each other permitting said reading means of each of said data processors (1 to 9) to read simultaneously multiple bit data sets projected by said projecting means (14) of one or more of said data processors.

2. The data switch of claim 1, characterized in that said projecting means (14) comprise a LED array.

3. The data switch of claim 1 and 2, characterized in that said reflecting means (16) is a reflective screen.

4. The data switch of claims 1 to 3, characterized in that said array of data processors (1 to 9) are voice processors.

## Patentansprüche

1. Datenschalter zur Aufteilung von Daten auf eine Vielzahl von Datenverarbeitungsgliedern, die durch optische Datenübertragungspfade miteinander verbunden sind, welche reflektierende Mittel zum Ausrichten eines Übertragungspfades von einem der Datenverarbeitungsglieder auf ein anderes der Datenverarbeitungsglieder einschließen,
gekennzeichnet durch die Kombination der folgenden Merkmale:
eine Matrix aus Datenprozessoren (1 bis 9),
mit einem jeden der Datenprozessoren (1 bis 9) verbundene Projektionsmittel (14) zum gleichzeitigen Projizieren von Mehrfachbit-Daten, welche von diesem Datenprozessor generiert werden,
mit jedem der Datenprozessoren (1 bis 9) verbundene Mittel (12) zum gleichzeitigen Lesen von Mehrfachbit-Daten, die von den Projektionsmitteln (14) eines oder mehrerer der Datenprozessoren projiziert werden,
Reflexionsmittels (16) zum gleichzeitigen Reflektieren der von den Projektionsmitteln (14) eines oder mehrerer der Datenprozessoren (1 bis 9) auf die Mittel zum Lesen (12) eines oder mehrerer der Datenprozessoren projizierten Mehrfachbit-Datensätze,
gegenseitiges optisches Ausrichten der Projektionsmittel (14) sämtlicher Datenprozessoren (1 bis 9), Reflexionsmittel (16) sowie Mittel zum Lesen (12) aller Datenprozessoren (1 bis 9) in Bezug aufeinander, was die Mittel zum Lesen eines jeden der Datenprozessoren (1 bis 9) in die Lage versetzt, gleichzeitig die von den Projektionsmitteln (14) eines oder mehrerer der Datenprozessoren projizierten Mehrfachbit-Datensätze zu lesen.

2. Datenschalter nach Anspruch 1, gekennzeichnet dadurch, daß die Projektionsmittel (14) eine LED-Matrix umfassen.

3. Datenschalter nach den Ansprüchen 1 und 2, gekennzeichnet dadurch, daß die Reflexionsmittel (16) aus einem reflektierenden Schirm bestehen.

4. Datenschalter nach den Ansprüchen 1 bis 3, gekennzeichnet dadurch, daß es sich bei den Matrix-Datenprozessoren (1 bis 9) um Sprachprozessoren handelt.

## Revendications

1. Commutateur de données pour partager des données entre plusieurs éléments de traitement de l'information interconnectés entre eux via des chemins de transmission optique de données comprenant un élément réflecteur pour diriger un chemin de transmission de l'un des dits éléments de traitement de l'information vers un autre des dits éléments de traitement de l'information,
caractérisé en ce qu'il comprend :
un groupement de processeurs de données (1 à 9), un élément de projection (14) connecté à chacun des dites processeurs de données (1 à 9) pour projeter optiquement une par une des données multibit générées par les dits processeurs de données,
un élément de lecture (12) connecté à chacun des dits processeurs de données (1 à 9) pour lire une par une les données multibit projetées par ledit élément de projection (14) d'au moins un des dits processeurs de données,
un élément réflecteur (16) pour réfléchir un par un des ensembles de données multibit projetées par ledit élément de projection (14) d'au moins un des dits processeurs de données (1 à 9) sur ledit élément de lecture (12) d'au moins un des dits processeurs de données,
caractérisé en ce qu'il comprend l'étape consistant à aligner ledit élément de projection (14) de tous les dits processeurs de données (1 à 9), ledit élément réflecteur (16) et ledit élément de lecture (12) de tous les dits processeurs de données (1 à 9) l'un par rapport à l'autre pour permettre au dit élément de lecture de chacun des dits processeurs de données (1 à 9) de lire simultanément les ensembles de données multibit projetées par ledit élément de projection (14) d'au moins un des dits processeurs de données.

2. Commutateur de données selon la revendication 1, caractérisé en ce que ledit élément de projection (14) comprend un groupement de diodes lumineuses.

3. Commutateur de données selon les revendications 1 et 2, caractérisé en ce que ledit élément réflecteur (16) est un écran réfléchissant.

4. Commutateur de données selon les revendications 1 à 3, caractérisé en ce que ledit groupement de processeurs de données (1 à 9) est composé de machines de traitement de la parole.
